# EUROPEAN PATENT APPLICATION

(11) **EP 4 485 143 A1**
(43) Date of publication of application: **01.01.2025**
(21) Application number: 23182254.5
(22) Date of filing: 29.06.2023
(51) Int. Cl.: G06F 3/01

(54) **GAZE INTERACTIONS WITH USER INTERFACES**

(71) Applicant: Koninklijke Philips N.V., 5656 AG Eindhoven (NL)
(72) Inventor: TUINHOUT, Jelle Jeroen, Eindhoven (NL); BUIL, Vincentius Paulus, Eindhoven (NL); KUHLMANN, Daan, 5656 AG Eindhoven (NL); LAUTE, Niels, Eindhoven (NL); WIJN, Victor, Eindhoven (NL); MAREGUDDI, Praveen Narayan, Eindhoven (NL)
(74) Representative: Philips Intellectual Property & Standards

(57) **Abstract**

A method for controlling gaze interactivity with a user interface, UI. The method comprises tracking the gaze of a user on the UI to allow the user to select a UI control with the user's gaze and determining whether the user's gaze is moving towards a region of interest, ROI, on the UI. In response to determining that the user's gaze is moving towards the ROI, gaze interactions with the UI are locked to prevent the user's gaze from selecting a different UI control.

## Description

### FIELD OF THE INVENTION

The invention relates to controlling gaze interactivity with user interfaces.

### BACKGROUND OF THE INVENTION

Interactions with medical user interfaces (e.g., ultrasound cart systems) are usually onehanded as the user (e.g., sonographer/specialist) often holds a medical device (e.g., transducer) in the other hand. This is also often the non-dominant hand. When the user interface is used (e.g., touch screen) is used, this results in inaccurate and slow interactions on the touch screen.

Additionally, there is a large proportion of long-time users developing muscle issues on the dominant hand, arm and shoulder using the medical device. These users may switch hands, using the injured dominant arm to operate the user interface. Interactions with the medical user interface typically requires lifting the hand from a physical control panel to, for example, a touch screen, which can be problematic if the shoulder is injured.

Thus, there is a need to improve interactions with medical user interfaces and user interfaces in general.

### SUMMARY OF THE INVENTION

The invention is defined by the claims.

According to examples in accordance with an aspect of the invention, there is provided a method for controlling gaze interactivity with a user interface, UI, the method comprising:
tracking the gaze of a user on the UI to allow the user to select a UI control with the user's gaze;
determining whether the user's gaze is moving towards a region of interest on the UI; and
in response to determining that the user's gaze is moving towards the region of interest, locking gaze interactions with the UI to prevent the user's gaze from selecting a different UI control.

The use of gaze interactions with the UI provides a seamless and intuitive interaction for the user and avoids the user having to raise their hands to interact with the UI (e.g., for a touchscreen UI).

Gaze interaction/input refers to a method of human-computer interaction where the direction or position of a person's gaze is used as an input to interact with a computer system or application (in this case, the medical UI). Instead of using traditional input devices like a mouse, gaze interaction relies on tracking the movements and focus of a person's eyes. In other words, gaze interactions use the user's gaze as an alternative to, for example, the movement of a mouse to highlight controls on the UI.

Gaze interaction typically involves the use of eye-tracking technology, which can precisely track the movement and position of the eyes. This technology uses cameras or sensors to capture and analyze the reflection or position of the eyes, allowing the computer system to interpret the user's gaze. Gaze interaction can be integrated into the UIs, allowing for eye-controlled interactions.

The first control may be a physical control (e.g., button, rotary control, touchpad etc.).

The medical UI may be configured to display one or more UI controls, wherein the user can adapt parameters of an image with the UI controls.

When a control displayed on the UI is highlighted by the gaze, a separate button/control can then be used to adapt the parameters corresponding to the control. For example, in an ultrasound UI, the control may correspond to gain for an ultrasound image. The gaze can be used to select the gain control when it is focused on the control and a rotary control could be used to adapt the gain.

However, it is common for users to look towards a region of interest as they are adapting the parameter. For example, the region of interest may be an ultrasound image displayed on an ultrasound UI. Often, the gaze of the user is quicker than the reaction time of a hand, or other physical control. Thus, a different UI control may be selected/highlighted by the gaze when the user begins to adapt the parameter with the physical control.

As such, it is proposed to lock the gaze interactions when the user's gaze moves towards the region of interest. Locking gaze interactions prevents the user's gaze from being able to select/highlight a different UI control and thus unintentionally adapting a different parameter.

Gaze interactions with the UI may be unlocked in response to the user not interacting with a first control for at least a first period of time, wherein the first control is for adapting a parameter corresponding to a UI control.

Determining whether the user's gaze is moving towards a region of interest on the UI may comprise determining the speed of the gaze, relative to the UI, in the direction of the region of interest, being above a first speed threshold.

When the user is looking towards the region of interest (e.g., an image), it can be assumed that the user wishes to check how the changes to the parameter have affected the medical image. As such, gaze interactions can be locked when such actions are detected. This action can be detected by checking whether the gaze speed (e.g., in pixels per second) in that direction is above a first speed threshold. The speed threshold may depend on the resolution of the screen of the medical UI and can be determined by experimentation during use.

Determining whether the user's gaze is moving towards a region of interest on the UI may comprise determining whether the head of the user is tilting towards the region of interest.

Checking whether user is looking towards the region of interest can also be achieved via the head tilt of the user.

The method may further comprise displaying, on the UI, the value of a parameter being adapted by the user at the position of the user's gaze on the UI.

The user can then always see how much they are adapting the parameter without having to change their gaze from the region of interest (to see how the parameter changes affect, for example, an image) and the position at which the parameter value is displayed (to see by how much they have adapted the parameter).

The method may further comprise adapting the position at which the parameter is displayed to avoid the region of interest, or a portion thereof, in response to the gaze of the user being on the region of interest.

This avoids any occlusion of the region of interest due to the parameter value being displayed on top thereof.

When the medical UI is configured to display an image, the method may also comprise determining the region of interest on the image (e.g., user input, via object detection etc.). The region of interest may be the whole image.

The UI may be a medical UI configured to display a medical image and UI controls to adapt parameters of the medical image.

The UI may be an ultrasound UI configured to display an ultrasound image and UI controls to adapt parameters of the ultrasound image.

The medical UI may be configured for other imaging modalities (e.g., CT, MRI, x-ray etc.).

The method may further comprise unlocking gaze interactions with the medical UI in response to determining that the user's gaze is not moving towards the region of interest.

Determining that the user's gaze is not moving towards the region of interest may comprise determining that the speed of the user's gaze, relative to the UI, in a direction away from the region of interest, is above a second speed threshold. Alternatively, or additionally, it may comprise determining that the user's head is tilting away from the region of interest.

The invention also provides a method for controlling gaze interactivity with a user interface, UI, the method comprising:
tracking the gaze of a user on the UI to allow the user to select a UI control with the user's gaze;
locking gaze interactions with the UI in response to the user interacting with a first control, wherein the first control is configured to adapt a parameter corresponding to a selected UI control.

Many UIs use a first touch control (e.g., a rotary controls) to adapt parameters of a selected UI control whilst they hold, or otherwise interact with other equipment (e.g., ultrasound probe). In these cases, they would either have to let go of the first control or the equipment to interact with the UI. Gaze interactions thus provide a seamless and intuitive interaction with the UI whilst they can still keep hold of the first control and the equipment.

However, while adapting a parameter in the UI, the user often wants to look towards a region of interest to see the effect of the change. This can result in the gaze selecting another button by accident.

Thus, it is proposed to lock gaze interactions when the user is interacting with the first control to adapt a parameter. This enables the user to look at the region of interest whilst adapting the parameters without having the risk of selecting a different UI control in the UI.

Gaze interactions could then be unlocked when the user has not interacted with the first control for a first period of time (e.g., 0.5, 1, 1.5, 2 seconds etc.). The particular value for the set period of time may depend on the application.

The method may further comprise unlocking gaze interactions with the UI in response to the user interacting with a second control.

In one example, the second control is a second function of a physical button/control with two functions, where the first control is the first function. For example, a rotary button may be rotated (first control) or clicked (second control).

The method may further comprise displaying, on the UI, the value of the parameter being adapted by the user at the position of the user's gaze on the UI.

The method may further comprise adapting the position at which the parameter is displayed to avoid a region of interest on the medical UI, or a portion thereof, in response to the gaze of the user being on the region of interest.

The invention also provides a computer program carrier comprising computer program code which, when executed on a computer, causes the computer to perform all of the steps of any of the afore-mentioned methods.

The computer program carrier may comprise computer memory (e.g., random-access memory), computer storage (e.g., hard drives, solid-state drives etc.). The computer program carrier may be a bitstream carrying the computer program code.

The invention also provides a system for controlling gaze interactivity with a user interface, UI, the system comprising:
a gaze tracker configured to track the gaze of a user relative to the UI to allow the user to select a UI control with the user's gaze; and
a processor configured to perform the all of the steps of any of the afore-mentioned methods.

The system may also comprise a gaze tracker configured to track the gaze of a user relative to the UI to allow the user to select a UI control with the user's gaze;

The system may further comprise the UI.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates an ultrasound user interface;
Fig. 2 shows the ultrasound UI of Fig. 1 with an improved gaze UI element; and
Fig. 3 shows a method for controlling gaze interactivity with a UI.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method for controlling gaze interactivity with a user interface, UI. The method comprises tracking the gaze of a user on the UI to allow the user to select a UI control with the user's gaze and determining whether the user's gaze is moving towards a region of interest, ROI, on the UI. In response to determining that the user's gaze is moving towards the ROI, gaze interactions with the UI are locked to prevent the user's gaze from selecting a different UI control.

Gaze interactions enable the creation of a user interface (UI) that allows users to look at a UI control on the user interface to select it instead of lifting the arm to interact with the user interface.

A separate control element can then be used to adapt the state of the selected UI control. For example, by pressing a rotary control/trackball, the user can toggle the UI control state to change a value/parameter corresponding to said UI control. This creates a seamless and intuitive interaction for the user and avoids them having to raise their hands to interact with the user interface.

However, it has been realized that, while changing a value, the user often wants to look towards a region of interest to see the effects of the change. When gaze interactions are used, this can result in the gaze activating another UI control by accident.

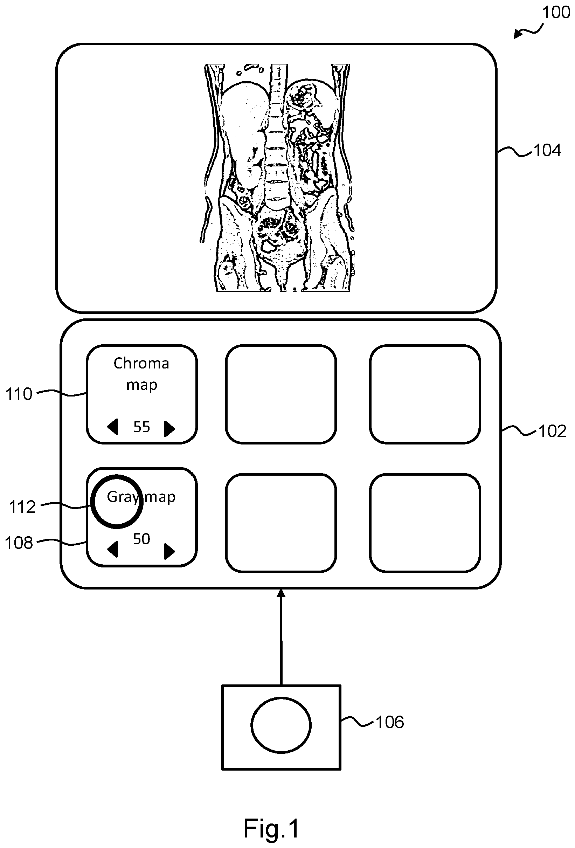

Fig. 1 illustrates an ultrasound user interface 100. The ultrasound UI 100 comprises two screens 102 and 104. The first screen 102 displays six UI controls and the second screen 104 displays an ultrasound image. A physical rotary control 106 is also provided to control the values/parameters corresponding to the selected UI control.

UI control 108 corresponds to grey map values and UI control 110 corresponds to chroma map values. In this example, the gaze of the user (illustrated as gaze UI element 112) is looking at, and therefore selects, the gray map UI control 108. However, whilst changing the grey map values, the user is likely to want to look up to see the effects on the ultrasound image. Due to this, it is likely that the user might accidently select the chroma map UI control 110 whilst looking up, therefore resulting in unwanted actions, frustration and a negative user experience.

In order to avoid accidental selections, an algorithm has been created which uses gaze position, button input, head position and/or a probability of image adjustments.

The general UI design acts as an augmented layer on top of the existing user interfaces.

Gaze interactions could be unlocked (i.e., UI controls cannot be selected) when a dedicated unlocking control is interacted with (e.g., pressed etc.), therefore allowing the user to select a UI control using their gaze. Whenever a certain amount of idleness is detected (e.g., the user has not given input for a number of seconds), gaze interactions could then be locked until they are unlocked again. However, this requires that the user waits for a set amount of time to lock the gaze interactions.

In an embodiment, gaze interactions are locked when a separate control (e.g., the rotary button 106) is interacted with. In this case, the separate control is configured to adapt values/parameters corresponding to the UI controls. Here, it is assumed that, when the user is using the separate control to adapt the values/parameters, they do not wish to change the selected UI control. It has also been found that it is highly likely that the user will look to towards a region of interest to the user to see the effects of the adaptions. Thus, locking gaze interactions when the separate control is interacted with reduces the risk of an unwanted change in selection of UI controls.

In another embodiment, gaze interactions are locked when the user's gaze is moving towards a pre-determined region of interest. The region of interest is a region of the UI which the user is expected to look towards to see the effect of any changes made. In Fig. 1, the region of interest may be the top screen 104 or the region of the top screen 104 occupied by the ultrasound image. Here, it is assumed that when the user's gaze is moving towards the region of interest, the user does not wish to select a different UI control with their gaze.

Determining whether the user's gaze is moving towards the region of interest can be achieved by determining the speed (e.g., in pixels per second) of the gaze in the direction of the region of interest. If the speed exceeds a threshold value, the gaze interactions can be locked.

The particular threshold speed values will highly depend on the user interface, screen resolutions etc. Experiments can be done to determine adequate speed thresholds for different user interfaces. These experiments may involve having users adapt a value/parameter on the UI and measuring the speed of the gaze from the selected UI control to the region of interest.

Alternatively, or additionally, determining whether the user's gaze is moving towards the region of interest can be achieved by determining whether the head of the user is tilting towards the region of interest. When the UI is relatively large, or the UI has more than one screen, the user's head will usually tilt when looking at region of interest relatively far from the UI controls. Determining whether the user's head is tilting can be achieved by measuring the head position over time and checking for abrupt changes (e.g., the head position moves upwards when the user's head tilts backwards to look higher up).

Locking the gaze interactions as per the embodiments above may be further based on whether there is a high probability that a different UI control will be selected. For example, if the UI control is right next to the region of interest, there may be no need to lock the gaze interactions.

While gaze interactions are locked, the user can change the locked buttons value by interacting with a separate control (e.g., rotating a rotary control or moving a trackball) while gazing at the region of interest.

For any of the embodiments described above, gaze interactions can be unlocked when there is no interaction with the separate control for more than a given amount of time. Alternatively, or additionally, gaze interactions can be unlocked when the user's head movement tilts away from the region of interest and/or the speed of gaze is higher than a certain threshold in a direction away from the region of interest. Furthermore, gaze interactions could be unlocked when a dedicated unlocking control is interacted with.

The gaze of the user can be tracked with eye-trackers using known gaze tracking methods.

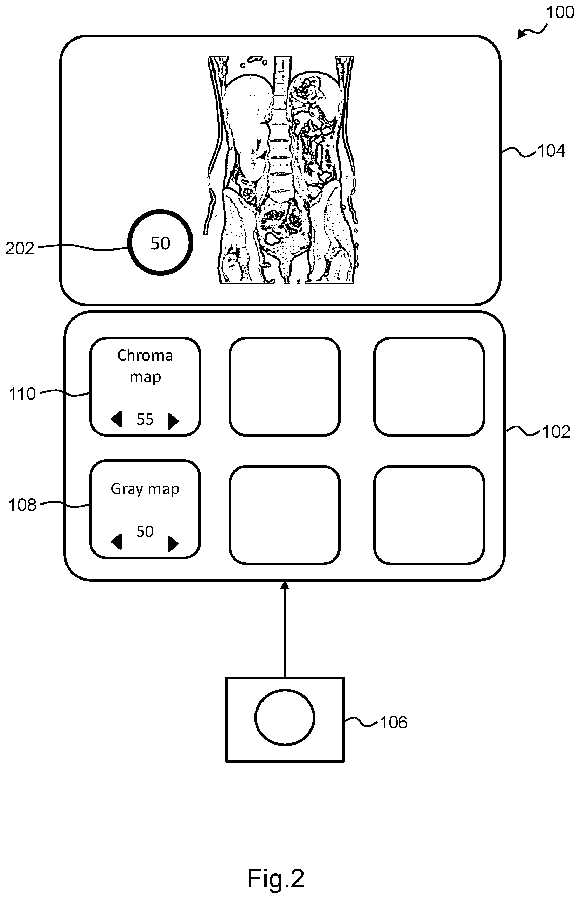

Fig. 2 shows the ultrasound UI of Fig. 1 with an improved gaze UI element 202. In this case, while gaze interactions are locked, the selected UI controls' value can be displayed on the gaze UI element 202. Thus, the selected UI controls' value follows the gaze of the user to the ultrasound image. This allows the user to keep changing this value even when not looking at the corresponding UI control. In this case, the gaze UI element with the overlayed values can be prevented from obstructing the ultrasound image to avoid occlusion of critical details on the ultrasound image.

It is noted that the ultrasound user interface shown in Figs 1 and 2 is provided as an example of a user interface which can be used with the methods described herein. It will be appreciated that the method can be used with any user interface using gaze tracking. It has been realized that all methods described herein as particularly advantageous when the region of interest is an image and the UI controls correspond to visual parameters of the image which can be adapted. This is because users are likely to look towards the image as they are adapting the values/parameters.

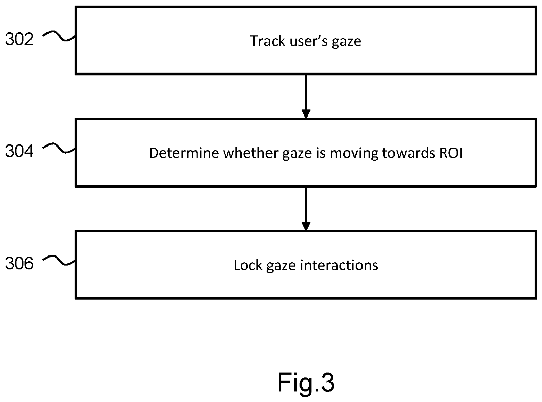

Fig. 3 shows a method for controlling gaze interactivity with a UI. The method comprises tracking 302 the gaze of a user on the UI to allow the user to select a UI control with the user's gaze and determining 304 whether the user's gaze is moving towards a region of interest (ROI) on the UI. In response to determining that the user's gaze is moving towards the ROI, gaze interactions with the UI are locked 304 to prevent the user's gaze from selecting a different UI control.

The skilled person would be readily capable of developing a processor for carrying out any herein described method. Thus, each step of a flow chart may represent a different action performed by a processor, and may be performed by a respective module of the processing processor.

One or more steps of any of the methods described herein may be performed by one or more processors. A processor comprises an electronic circuit suitable for processing data. Any method described herein may be computer-implemented, where computer-implemented means that the steps of said methods are performed by one or more computers and where a computer is defined as a device suitable for processing data. A computer may be suitable for processing data according to prescribed instructions.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

Any methods described herein exclude a method for performing mental acts as such.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A method for controlling gaze interactivity with a user interface, UI, the method comprising:
tracking (302) the gaze of a user on the UI to allow the user to select a UI control with the user's gaze;
determining (304) whether the user's gaze is moving towards a region of interest on the UI; and
in response to determining that the user's gaze is moving towards the region of interest, locking (306) gaze interactions with the UI to prevent the user's gaze from selecting a different UI control.

2. The method of claim 1, wherein determining whether the user's gaze is moving towards a region of interest on the UI comprises determining the speed of the gaze, relative to the UI, in the direction of the region of interest, being above a first speed threshold.

3. The method of claims 1 or 2, wherein determining whether the user's gaze is moving towards a region of interest on the UI comprises determining whether the head of the user is tilting towards the region of interest.

4. The method of any of claims 1 to 3, further comprising displaying, on the UI, the value of a parameter being adapted by the user at the position of the user's gaze on the UI.

5. The method of claim 4, further comprising adapting the position at which the parameter is displayed to avoid the region of interest, or a portion thereof, in response to the gaze of the user being on the region of interest.

6. The method of any of claims 1 to 5, further comprising unlocking gaze interactions with the medical UI in response to determining that the user's gaze is not moving towards the region of interest.

7. A method for controlling gaze interactivity with a user interface, UI, the method comprising:
tracking the gaze of a user on the UI to allow the user to select a UI control with the user's gaze;
locking gaze interactions with the UI in response to the user interacting with a first control, wherein the first control is configured to adapt a parameter corresponding to a selected UI control.

8. The method of claim 7, further comprising unlocking gaze interactions with the UI in response to the user interacting with a second control.

9. The method of claims 7 or 8, further comprising displaying, on the UI, the value of the parameter being adapted by the user at the position of the user's gaze on the UI.

10. The method of claim 9, further comprising adapting the position at which the parameter is displayed to avoid a region of interest on the medical UI, or a portion thereof, in response to the gaze of the user being on the region of interest.

11. A computer program carrier comprising computer program code which, when executed on a computer, causes the computer to perform all of the steps according to any of claims 1 to 6 and/or any of claims 7 to 10.

12. A system for controlling gaze interactivity with a user interface, UI, the system comprising:
a gaze tracker configured to track the gaze of a user relative to the UI to allow the user to select a UI control with the user's gaze; and
a processor configured to perform all of the steps according to any of claims 1 to 6.

13. The system of claim 12, further comprising the UI.

14. A system for controlling gaze interactivity with a user interface, UI, the system comprising:
a gaze tracker configured to track the gaze of a user relative to the UI to allow the user to select a UI control with the user's gaze;
a first control configured to adapt a parameter corresponding to a selected UI control; and
a processor configured to perform all of the steps according to any of claims 7 to 10.

15. The system of claim 14, further comprising the UI.
